# EUROPÄISCHE PATENTANMELDUNG

(11) **EP 1 091 468 A1**
(43) Veröffentlichungstag der Anmeldung: **11.04.2001**
(21) Anmeldenummer: 99119382.2
(22) Anmeldetag: 29.09.1999
(51) Int. Cl.: H02K 1/32

(54) **Elektrische Maschine und Kühlverfahren hierfür**

(71) Anmelder: SIEMENS AKTIENGESELLSCHAFT, 80333 München (DE)
(72) Erfinder: Klaar, Jürgen, Dipl.-Ing., 47506 Neukirchen-Vluyn (DE)

(57) **Zusammenfassung**

Die vorliegende Erfindung betrifft eine elektrische Maschine (10), insbesondere einen Turbogenerator, mit einer Reihe von Spulen (13, 14) und einem Einsatzring (16). Zur Verbesserung der Kühlwirkung ist erfindungsgemäß mindestens ein Kühlkanal (26) in dem Einsatzring (16) angeordnet.

## Beschreibung

Die vorliegende Erfindung betrifft eine elektrische Maschine, insbesondere einen Turbogenerator, mit einem Läufer, der eine Reihe von Spulen und einen Einsatzring aufweist und zur Kühlung mit mindestens einem Kühlkanal versehen ist, der von einem Kühlmittel durchströmbar ist.

Bei bekannten derartigen Maschinen werden die Spulen des Läufers zur Leistungssteigerung gekühlt. Es werden insbesondere ein-, zwei- und vierflutige Wegekopfkühlungen eingesetzt. Bei diesen Kühlungsarten wird jedoch die Leistungsgrenze der elektrischen Maschine durch die thermische Beanspruchung der Spulen, insbesondere im tangentialen Bereich der größten Spule, begrenzt.

Der vorliegenden Erfindung liegt daher die Aufgabe zugrunde, eine verbesserte Kühlung einer elektrischen Maschine, insbesondere des Läufers eines Turbogenerators, zur Leistungssteigerung zu ermöglichen.

Erfindungsgemäß wird diese Aufgabe bei einer Maschine der eingangs genannten Art dadurch gelöst, daß mindestens ein Kühlkanal in dem Einsatzring angeordnet ist.

Das Anordnen mindestens eines Kühlkanals in dem Einsatzring erhöht die Anzahl der insgesamt vorhandenen Kühlkanäle. Bei gleichbleibendem Druckunterschied zwischen dem Eintritt und dem Austritt des Kühlmittels läßt sich somit eine erhöhte Kühlleistung erreichen. Weiter wird die an den Einsatzring angrenzende größte Spule durch den erfindungsgemäß vorgesehenen mindestens einen Kühlkanal besser gekühlt.

Vorteilhafte Ausgestaltungen und Weiterbildungen der Erfindung gehen aus den abhängigen Ansprüchen hervor.

Vorteilhaft weist der Einsatzring mehrere gleichmäßig über seinen Umfang verteilte Kühlkanäle auf. Hierdurch wird eine gleichmäßige Kühlwirkung über den gesamten Umfang des Einsatzrings und damit eine durchgehende Kühlung der an den Einsatzring angrenzenden Spule erreicht.

Gemäß einer vorteilhaften ersten Ausgestaltung ist der mindestens eine Kühlkanal als radial verlaufende, im wesentlichen zylindrische Bohrung ausgebildet. Eine derartige Bohrung kann rasch, einfach und kostengünstig mit hoher Genauigkeit an der gewünschten Position angebracht werden.

In vorteilhafter zweiter Ausgestaltung ist der mindestens eine Kühlkanal als Nut ausgebildet. Derartige Nuten können ebenfalls einfach und mit hoher Genauigkeit hergestellt werden.

Nach einer vorteilhaften Weiterbildung weist der mindestens eine Kühlkanal einen Knick oder einen Bogen auf. Hierdurch wird die Länge des Kühlkanals vergrößert und somit die Kühlwirkung verbessert.

Vorteilhaft ist der Knick oder der Bogen entgegen der Drehrichtung des Läufers geneigt. Hierdurch wird eine Gestaltung des mindestens einen Kühlkanals ähnlich einer Lüfterschaufel erreicht und der Volumenstrom des Kühlmittels erhöht. Die Kühlwirkung wird somit weiter verbessert.

In vorteilhafter Ausgestaltung weist der Einsatzring einen größeren Durchmesser als eine die Spulen umgebende Kappe auf. Der größere Durchmesser des Einsatzrings führt im Betrieb der elektrischen Maschine auf Grund der Rotation des Läufers zu einem erhöhten Förderdruck auf Grund des Schornsteineffekts. Die Kühlwirkung wird weiter verbessert.

Vorteilhaft weist der Läufer einen Sammelkanal für das Kühlmittel auf, der durch mindestens eine Trennwand zum Aufteilen des Kühlmittelstroms unterteilt ist. Der Kühlmittelstrom kann somit zielgerichtet aufgeteilt und für die Kühlung einzelner Spulen eingesetzt werden. Es wird insbesondere eine verbesserte Kühlung der an den Einsatzring angrenzenden Spule erreicht.

Gemäß einer vorteilhaften Weiterbildung weist die an den Einsatzring angrenzende Spule einen separaten Kühlkanal auf. Hierdurch wird die Kühlung dieser Spule drastisch verbessert und somit eine erhebliche Leistungsteigerung möglich.

In vorteilhafter Ausgestaltung ist zwischen der an den Einsatzring angrenzenden Spule und dem Einsatzring eine Dichtung angeordnet. Diese Dichtung schottet den Kühlkanal gegenüber einem Warmgaskanal des Läufers ab und verhindert ein unkontrolliertes Überströmen des Kühlmittels.

Vorteilhaft sind im Bereich des Einsatzrings mit Eintrittsöffnungen für das Kühlmittel vorgesehen. Das Kühlmittel kann somit von der Stirnseite des Läufers direkt zum Einsatzring zugeführt werden.

Nach einer vorteilhaften Weiterbildung ist dem Einsatzring eine Blende zugeordnet, um ein Strömen des aus Austrittsöffnungen austretenden Kühlmittels zu Eintrittsöffnungen für das Kühlmittel zu verhindern. Die Blende wirkt einem wiederholten Zuführen von bereits erwärmten Kühlmittel entgegen, so daß eine gleichbleibende Kühlwirkung für längere Zeiträume gewährleistet ist.

Vorteilhaft sind eine erste Gruppe von Eintrittsöffnungen für eine radiale und tangentiale Strömung des Kühlmittels durch den Läufer und eine zweite Gruppe von Eintrittsöffnungen für eine axiale Strömung des Kühlmittels durch den Läufer vorgesehen. Das Bereitstellen unterschiedlicher Gruppen von Eintrittsöffnungen ermöglicht eine gezielte Kühlung ausgewählter Bereiche des Läufers.

Die Erfindung betrifft weiter ein Verfahren zur Kühlung eines Läufers einer elektrischen Maschine, insbesondere einer oben beschriebenen Maschine in Form eines Turbogenerators. Erfindungsgemäß wird das zur Kühlung verwendete Kühlmittel durch einen Einsatzring des Läufers geleitet. Hierdurch wird eine Kühlung des Einsatzrings und der an den Einsatzring angrenzenden Spule erreicht.

Vorteilhaft wird der Kühlmittelstrom in dem Läufer aufgeteilt. Das Aufteilen erlaubt ein gezieltes Kühlen ausgewählter Bereiche des Läufers.

Die Erfindung wird nachstehend anhand von Ausführungsbeispielen näher beschrieben, die in schematischer Weise in der Zeichnung dargestellt sind. Für gleiche oder funktionsidentische Bauteile werden dieselben Bezugszeichen verwendet. Dabei zeigt:
Figur 1 eine schematische Darstellung eines Schnitts durch eine elektrische Maschine;
Figur 2 eine vergrößerte Darstellung eines Schnitts entlang der Linie II in Figur 1;
Figur 3 eine Ansicht ähnlich Figur 2 in weiterer Ausgestaltung;
Figur 4 eine vergrößerte Schnittdarstellung ähnlich Figur 1 in erster Ausführungsform;
Figur 5 eine vergrößerte Schnittdarstellung ähnlich Figur 1 in zweiter Ausführungsform;
Figur 6 eine schematische perspektivische Darstellung des Kühlmittelstroms; und
Figur 7 eine Ansicht ähnlich Figur 1 in dritter Ausführungsform.

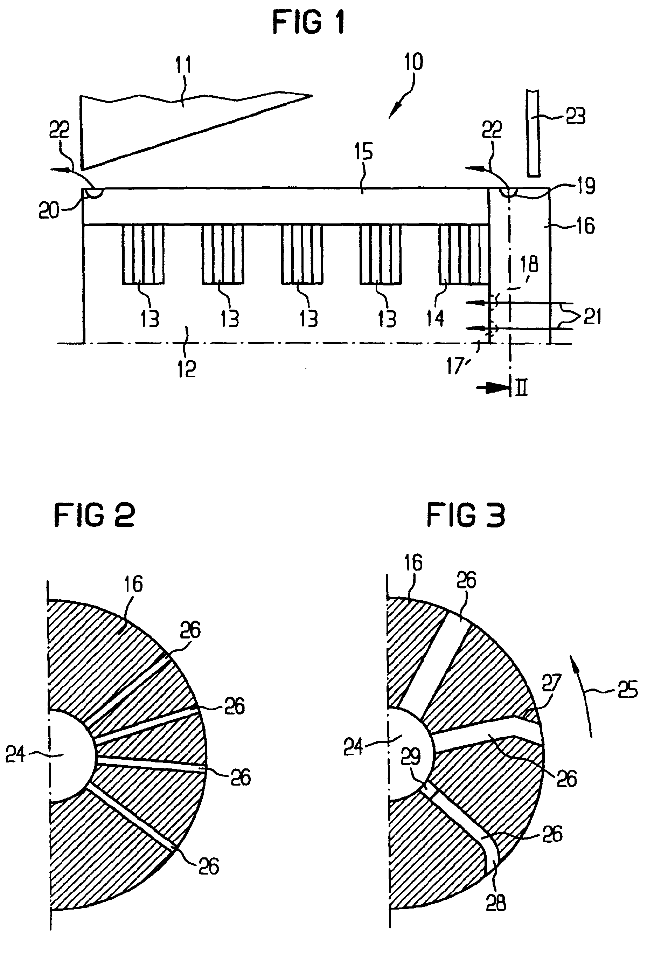

In Figur 1 ist schematisch als Beispiel einer elektrischen Maschine ein Turbogenerator 10 im Schnitt dargestellt. Der Turbogenerator 10 umfaßt einen Stator 11 und einen Läufer 12 mit einer Reihe von Spulen 13, 14. Die Spulen 13, 14 werden radial von einer Kappe 15 abgedeckt. Zur Halterung der Kappe 15 ist ein Einsatzring 16 vorgesehen. Die an den Einsatzring 16 angrenzende Spule 14 ist größer als die weiteren Spulen 13 des Läufers 12.

Im Bereich des Einsatzrings 16 sind zwei Eintrittsöffnungen 17, 18 zum Zuführen eines Kühlmittels vorgesehen. Das Kühlmittel durchströmt den Läufer 12 und kühlt hierbei die Spulen 13, 14. Anschließend tritt es über Austrittsöffnungen 19, 20 aus. Das Strömen des Kühlmittels ist schematisch mit den Pfeilen 21, 22 dargestellt.

Die Austrittsöffnung 19 des Einsatzrings 16 befindet sich in der Nähe der Eintrittsöffnungen 17, 18. Um ein Rückströmen des aus den Austrittsöffnungen 19 austretenden Kühlmittels zu den Eintrittsöffnungen 17, 18 zu verhindern, ist dem Einsatzring 16 eine Blende 23 zugeordnet.

Die Figuren 2 und 3 zeigen einen Schnitt durch den Einsatzring 16 entlang der Linie II in Figur 1. Gemäß der in Figur 2 dargestellten Ausführungsform weist der Einsatzring 16 eine Reihe von gleichmäßig über seinen Umfang verteilten, im wesentlichen zylindrischen Bohrungen 26 auf. Die Bohrungen 26 erstrecken sich vom äußeren Umfang des Einsatzrings 16 bis zu einem Innenraum 24.

Bei der Ausgestaltung gemäß Figur 3 ist der Einsatzring 16 mit einer Reihe von Nuten 26 versehen. Diese Nuten 26 können geradlinig verlaufen, einen Knick 27 oder einen Bogen 28 aufweisen. Der Knick 27 und der Bogen 28 sind hierbei entgegen der Drehrichtung des Läufers 12 geneigt, die durch den Pfeil 25 angedeutet ist. Die Ausbildung des Knicks 27 und des Bogens 28 ähnelt einem Lüfterrad. Im Betrieb des Turbogenerators 10 bei Rotation des Läufers 12 wird hierdurch der Volumenstrom des Kühlmittels durch die Nuten 26 vergrößert. Die Nuten 26 können entweder direkt von dem Innenraum 24 des Einsatzrings 16 abzweigen oder gegenüber diesem einen Versatz 29 aufweisen.

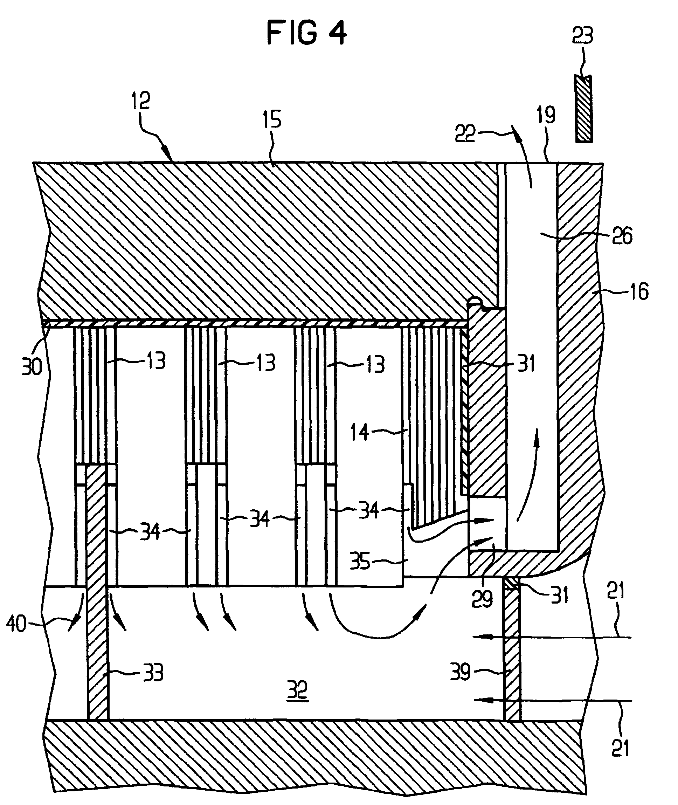

Figur 4 zeigt eine vergrößerte Schnittdarstellung ähnlich Figur 1 in erster Ausführungsform. Zwischen der Kappe 15 und den Spulen 13, 14 des Läufers 12 ist eine Umhüllung 30 angeordnet. Die Umhüllung 30 dient zur Isolierung zwischen der Kappe 15 und den Spulen 13, 14. Jeder Spule 13 sind zwei Kühlkanäle 34 zugeordnet. Das aus den Kühlkanälen 34 austretende Kühlmittel tritt in einen Sammelkanal 32 ein, der durch eine Trennwand 33 unterteilt ist. Die Trennwand 33 teilt den Kühlmittelstrom auf. Ein Teil des Kühlmittelstroms wird in Richtung des Einsatzrings 16 und der andere Teil gemäß Pfeil 40 zu den Austrittsöffnungen 20 geleitet. Gegenüber der Umgebung ist der Sammelkanal 32 durch eine weitere Wand 39 mit einer Dichtung 31 zum Einsatzring 16 abgeschlossen.

Auch der an den Einsatzring 16 angrenzende Spule 14 ist ein Kühlkanal 34 zugeordnet. Innerhalb der Spule 14 ist ein weiterer Kühlkanal 35 vorgesehen, der die Sammelschiene 32 über den Versatz 29 mit dem Kühl kanal 26 des Einsatzrings 16 verbindet.

Das Kühlmittel tritt gemäß den Pfeilen 21 inUmfangsrichtung versetzt zu dem Sammelkanal 32 ein, durchströmt die Kühlkanäle 34 der Spulen 13, 14 und tritt anschließend über den Sammelkanal 32, den Kühlkanal 35, den Versatz 29 und den Kühlkanal 26 in Pfeilrichtung 22 aus. Der Strömungsverlauf des Kühlmittels ist schematisch mit nicht näher gekennzeichneten Pfeilen dargestellt.

Durch das Aufteilen des Kühlmittelstroms wird eine gezielte Kühlung der an den Einsatzring 16 angrenzenden Spule 14 sichergestellt. Weiter tritt das Kühlmittel an voneinander getrennten Austrittsstellen 19, 20 aus. Hierdurch wird eine gleichmäßige Verteilung des austretenden Kühlmittels erreicht. Weiter wird der Gesamtvolumenstrom des Kühlmittels erhöht.

Zwischen der Spule 14 und dem Einsatzring 16 ist eine Dichtung 31 angeordnet. Diese stellt zusammen mit der weiteren Dichtung 31 zwischen der Wand 39 und dem Einsatzring 16 einen kontrollierten Kühlmittelstrom sicher.

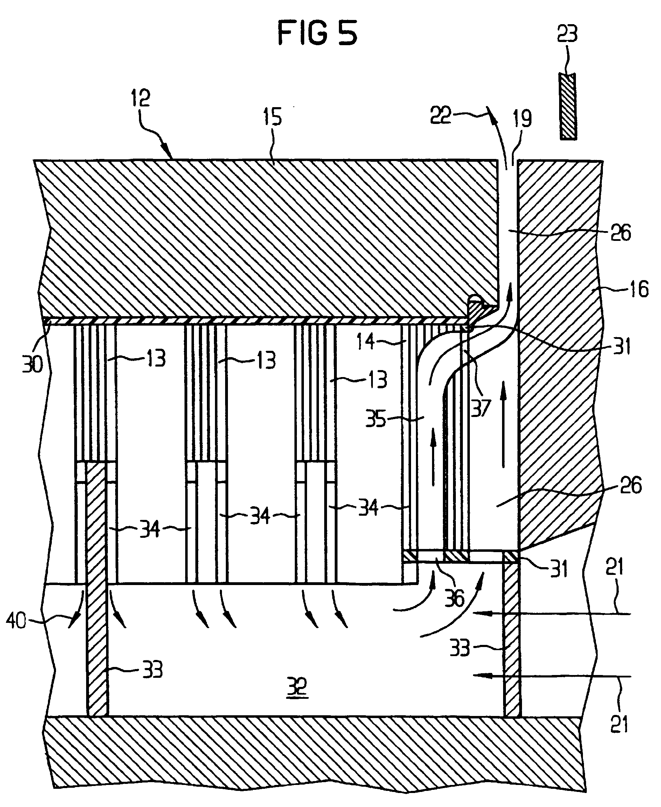

Figur 5 zeigt ebenfalls eine vergrößerte Schnittdarstellung ähnlich Figur 1 in zweiter Ausführungsform. Die an den Einsatzring 16 angrenzende Spule 14 ist mit einem eigenen Kühlkanal 35 mit einem Eintritt 36 und einem Austritt 37 versehen. Dieser Kühlkanal 35 verläuft näherungsweise parallel zu dem Kühlkanal 26 des Einsatzrings 16. Zur Abdichtung dienen erneut Dichtungen 31.

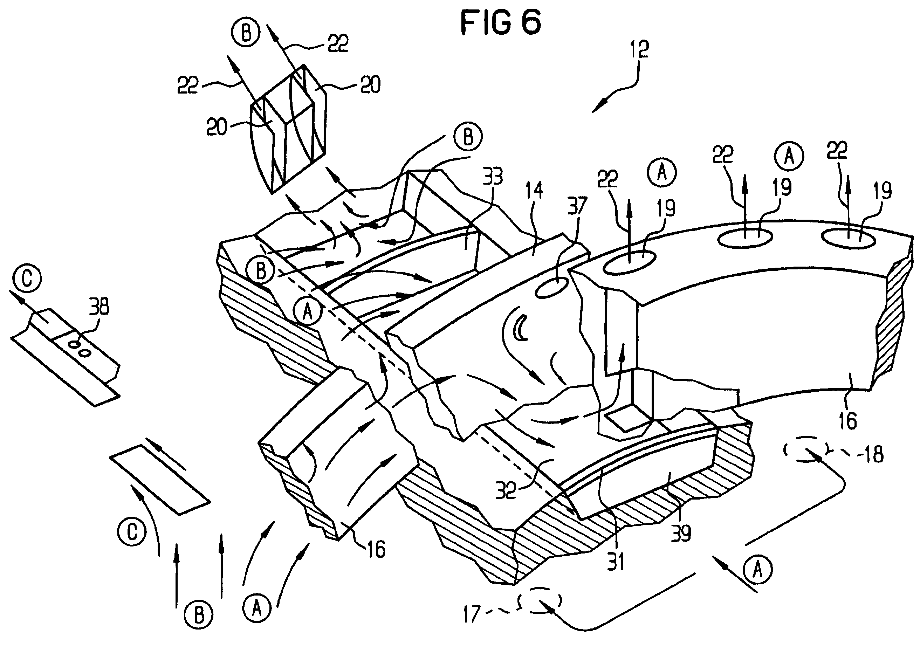

In Figur 6 ist der Kühlmittelstrom schematisch in einer perspektivischen Ansicht dargestellt. Das Kühlmittel tritt gemäß A, B, C in den Läufer 12 ein. A bezeichnet hierbei eine radiale Strömung des Kühlmittels, B eine tangentiale und C eine axiale. Der Kühlmittelstrom gemäß A, B wird mehrfach umgelenkt und tritt schließlich in den Sammelkanal 32 ein. Hierbei wird die an den Einsatzring 16 angrenzende Spule 14 durchströmt. Der Sammelkanal 32 ist durch die Trennwand 33 unterteilt, so daß der Kühlmittelstrom aufgeteilt und umgelenkt wird. Ein Teil des Kühlmittelstroms gemäß B wird durch die Trennwand 33 zu den Austrittsöffnungen 22 geführt. Der andere Teil wird gemäß A in Gegenrichtung zum Einsatzring 16 geführt und tritt durch die Austrittsöffnungen 19 aus. Der Kühlmittelstrom gemäß C durchströmt den Läufer 12 in Axialrichtung und tritt aus schematisch dargestellten Austrittsöffnungen 38 aus.

Der Kühlmittelstrom gemäß A, B tritt durch die Eintrittsöffnungen 17 und der Kühlmittelstrom gemäß C durch die Eintrittsöffnungen 18 des Eintrittsrings 16 in den Läufer 12 ein. Durch das Bereitstellen unterschiedlicher Eintrittsöffnungen 17, 18 können diese auf den gewünschten Kühlmittelstrom A, B, C abgestimmt werden. Weiterhin ist die Kühlung in radialer und tangentialer Richtung gemäß A, B unabhängig von der Kühlung in axialer Richtung gemäß C.

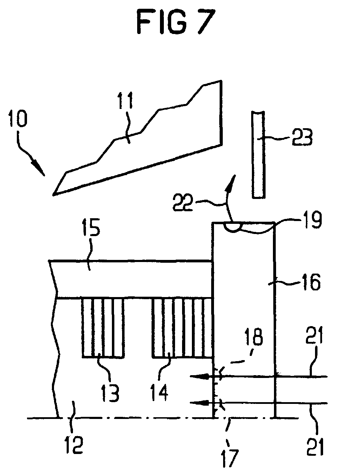

Figur 7 zeigt eine Ansicht ähnlich Figur 1 in dritter Ausführungsform. Bei dieser Ausführungsform weist der Einsatzring 16 einen größeren Durchmesser als die die Spulen 13, 14 umgebende Kappe 15 auf. Bei Betrieb des Turbogenerators 10 wird durch diesen vergrößerten Durchmesser eine größere Förderhöhe erzielt, die den Volumenstrom des Kühlmittels durch den Einsatzring vergrößert. Hierdurch wird die Kühlwirkung verbessert.

Durch das erfindungsgemäße Anordnen mindestens eines Kühlkanals 26 in dem Einsatzring 16 wird die Zahl der Kühlkanäle erhöht und hiermit die Kühlwirkung verbessert. Durch die erfindungsgemäß vorgesehene Formgebung der Kühlkanäle 26 und die Vergrößerung des Durchmessers des Einsatzrings 16 wird eine weitere Erhöhung der Kühlwirkung erreicht. Zudem wird die an den Einsatzring 16 angrenzende Spule 14 wesentlich besser als bei den bekannten Turbogeneratoren 10 gekühlt.

## Patentansprüche

1. Elektrische Maschine, insbesondere Turbogenerator, mit einem Läufer (12), der eine Reihe von Spulen (13, 14) und einen Einsatzring (16) aufweist und zur Kühlung mit mindestens einem Kühlkanal (26; 32; 34; 35) versehen ist, der von einem Kühlmittel durchströmbar ist,
**dadurch gekennzeichnet,** daß mindestens ein Kühlkanal (26) in dem Einsatzring (16) angeordnet ist.

2. Maschine nach Anspruch 1,
**dadurch gekennzeichnet,** daß der Einsatzring (16) mehrere gleichmäßig über seinen Umfang verteilte Kühlkanäle (26) aufweist.

3. Maschine nach Anspruch 1 oder 2,
**dadurch gekennzeichnet,** daß der mindestens eine Kühlkanal (26) als radial verlaufende, im wesentlichen zylindrische Bohrung ausgebildet ist.

4. Maschine nach Anspruch 1 oder 2,
**dadurch gekennzeichnet,**daß der mindestens eine Kühlkanal (26) als Nut ausgebildet ist.

5. Maschine nach Anspruch 4,
**dadurch gekennzeichnet,**daß der mindestens eine Kühlkanal (26) einen Knick (27) oder einen Bogen (28) aufweist.

6. Maschine nach Anspruch 5,
**dadurch gekennzeichnet,** daß der Knick (27) oder der Bogen (28) entgegen der Drehrichtung (25) des Läufers (12) geneigt ist.

7. Maschine nach einem der Ansprüche 1 bis 6,
**dadurch gekennzeichnet,** daß der Einsatzring (16) einen größeren Durchmesser als eine die Spulen (13, 14) umgebende Kappe (15) aufweist.

8. Maschine nach einem der Ansprüche 1 bis 7,
**dadurch gekennzeichnet,** daß der Läufer (12) einen Sammelkanal (32) für das Kühlmittel aufweist, der durch mindestens eine Trennwand (33) zum Aufteilen des Kühlmittelstroms unterteilt ist.

9. Maschine nach einem der Ansprüche 1 bis 8,
**dadurch gekennzeichnet,** daß die an den Einsatzring (16) angrenzende Spule (14) einen separaten Kühlkanal (35) aufweist.

10. Maschine nach einem der Ansprüche 1 bis 9,
**dadurch gekennzeichnet,** daß zwischen der an den Einsatzring (16) angrenzenden Spule (14) und dem Einsatzring (16) eine Dichtung (31) angeordnet ist.

11. Maschine nach einem der Ansprüche 1 bis 10,
**dadurch gekennzeichnet,** daß im Bereich des Einsatzrings (16) Eintrittsöffnungen (17, 18) für das Kühlmittel vorgesehen sind.

12. Maschine nach einem der Ansprüche 1 bis 11,
**dadurch gekennzeichnet,** daß dem Einsatzring (16) eine Blende (23) zugeordnet ist, um ein Strömen des aus Austrittsöffnungen (19, 20, 38) austretenden Kühlmittels zu Eintrittsöffnungen (17, 18) für das Kühlmittel zu verhindern.

13. Maschine nach einem der Ansprüche 1 bis 12,
**dadurch gekennzeichnet,** daß eine erste Gruppe von Eintrittsöffnungen (17) für eine radiale und tangentiale Strömung (A, B) des Kühlmittels durch den Läufer (12) und eine zweite Gruppe von Eintrittsöffnungen (18) für eine axiale Strömung (C) des Kühlmittels durch den Läufer (12) vorgesehen sind.

14. Verfahren zur Kühlung eines Läufers (12) einer elektrischen Maschine (10), insbesondere einer Maschine gemäß einem der vorhergehenden Ansprüche,
**dadurch gekennzeichnet,** daß das zur Kühlung verwendete Kühlmittel durch einen Einsatzring (16) des Läufers (12) geleitet wird.

15. Verfahren nach Anspruch 14,
**dadurch gekennzeichnet,**daß der Kühlmittelstrom in dem Läufer (12) aufgeteilt wird.
